# EUROPEAN PATENT APPLICATION

(11) **EP 3 091 453 A1**
(43) Date of publication of application: **09.11.2016**
(21) Application number: 15166626.0
(22) Date of filing: 06.05.2015
(51) Int. Cl.: G06F 17/50, H04N 21/466, G06F 17/30, G06F 11/36

(54) **DESIGNING A LONGEVITY TEST FOR A SMART TV**

(71) Applicant: Vestel Elektronik Sanayi ve Ticaret A.S., 45030 Manisa (TR)
(72) Inventor: Gebizli, Ceren, 45030 Manisa (TR); Metin, Duygu, 45030 Manisa (TR)
(74) Representative: Ascherl, Andreas

(57) **Abstract**

The invention relates to a method of designing a longevity test for a smart television, to a computer program, to a machine-readable storage unit and to a use of the method in applications of predicting longevity of connected smart televisions. The method comprises the steps: a) associating (1) a plurality of smart televisions to a plurality of end users, wherein for each end user a usage log file (11) is generated; b) analyzing (2) the plurality of usage log files (11) such that usage profiles (12) of the plurality of end users and/or visiting frequencies of modules of the plurality of smart televisions are detectable; c) defining (3) a system model (10) according to the analyzing step b), wherein the system model (10) comprises a plurality of state transitions and a corresponding plurality of transition probability values; and d) testing (4) the defined system model (10), thereby generating (5) a plurality of test designs based on the detected usage profiles (12) and/or the detected visiting frequencies of modules of step b). In this way, a possibility is provided for simulating daily usage in a limited period of time and for predicting software lifespan of a television.

## Description

### FIELD OF THE INVENTION

The invention relates to a method of designing a longevity test for a smart television (Smart TV), to a computer program and to a machine-readable storage unit. The invention also relates to a use of the method in applications of predicting longevity of connected smart televisions.

### BACKGROUND OF THE INVENTION

Document US 2009/0158381 A1 describes a content processing device that is configured to selectively receive a media signal from a media signal provider. A distribution device is configured to selectively receive a media signal from the content processing device, and to selectively provide one or more command signals to the content processing device. A computer is configured to selectively receive the media signal from the distribution device, and to selectively provide commands to the distribution device. The distribution device is further configured to provide the received one or more commands to the content processing device via the one or more command signals.

It is known that the advertised lifespan of most televisions ranges from approximately 50,000 hours to 100,000 hours, which is approximately 6 to 12 years of continuous playing. Such numbers are provided by manufacturers who usually do not test a television for at least 6 or 7 years before selling it. Typically such numbers are generated by extrapolating a stress test on the assumed worst individual component of the TV. In classical longevity test scenarios there exists a problem that not the daily usage of a dummy user is simulated but heavy work load is applied by stressing some of the features of the television that the dummy user may never use for limited time. For manufacturers it is not possible to run a longevity test for example for 6 to 7 years in case of a TV. So they choose to run a limited time test with heavy load to simulate long time usage with light load.

### SUMMARY OF THE INVENTION

It is the object of the invention to provide a possibility for simulating daily usage in a limited period of time and for predicting software lifespan of a television, preferably of a Smart TV.

This object is achieved by the subject matter of the independent claims. Preferred embodiments are defined in the sub claims.

According to a first aspect of the invention, this object is achieved by a method of designing a longevity test for a smart television, comprising the steps: a) associating a plurality of smart televisions to a plurality of end users, wherein for each end user a usage log file is generated; b) analyzing the plurality of usage log files such that usage profiles of the plurality of end users and/or visiting frequencies of modules of the plurality of smart televisions are detectable; c) defining a system model according to the analyzing step b), wherein the system model comprises a plurality of state transitions and a corresponding plurality of transition probability values; and d) testing the defined system model, thereby generating a plurality of test designs based on the detected usage profiles and/or the detected visiting frequencies of modules of step b).

It is an idea of the invention to provide a longevity test to discover how a system, such as a smart television, behaves under sustained use. It is therefore ensured that the television is fully functional after some long period of sustain activity and it can also be predicted how long the system may continue working before it functionally breaks. Preferably, software lifespan of a smart television is predicted. Also designing a longevity test for connected smart televisions in order to predict software lifespan becomes possible. Preferably, usage profiles are modelled and an accelerated longevity test is automated based on daily usage simulation models.

According to a preferred embodiment of the invention, the method further comprises the step of editing the usage profiles and/or the visiting frequencies of modules based on the result of step d) and repeating step d) such that a plurality of test designs is updated. It is thus ensured that changes in usage profiles are reflected to the system under test model (SUT model) to generate new test cases with less effort compared to a manual test case and test script development.

According to a preferred embodiment of the invention, the system model comprises at least one of a Markov chain, an event sequence graph, a unified modelling language and a finite state automation. Hence, Markov chain models are preferably used as system models in which transitions among system states are annotated with probabilities.

According to a preferred embodiment of the invention, the step of generating the plurality of test designs is performed according to a predetermined algorithm. The predetermined algorithm preferably comprises at least one of a Chinese postman, a user-oriented, a most probable, a random and a tagged path algorithm. Different algorithms can thus be combined where a single algorithm can be chosen that is adequate for generating the plurality of test designs.

According to a preferred embodiment of the invention, during the step of analyzing a source, a connectivity feature and/or a television operation is/are determined. Hence, different applications from different sources with different features are selectable. Preferably, the source corresponds to at least one of SCART, HDMI, personal computer and media browser. The connectivity feature preferably corresponds to at least one application, such as YouTube, Portal and Hybrid broadcast broadband TV (HbbTV). The television operation preferably corresponds to at least one of menu navigation, channel navigation, teletext and an electronic program guide.

According to a second aspect of the invention, the above mentioned object is achieved by a computer program, loadable or loaded in a memory of a computer with orders readable by the computer for performing the method according to the first aspect of the invention, when the orders are performed on the computer.

According to a third aspect of the invention, the above mentioned object is achieved by a machine-readable storage unit, on which a computer program according to the second aspect of the invention is stored.

According to a fourth aspect of the invention, the above mentioned object is achieved by a use of a method according to the first aspect of the invention in applications of predicting longevity of connected smart televisions.

### BRIEF DESCRIPTION OF THE DRAWINGS

These and other aspects of the invention will be apparent from and elucidated with reference to the embodiments described hereinafter which should be considered as examples of the invention without limiting the scope of the invention.

In the drawings:
- Fig. 1: exemplary shows an approach for a method of designing a longevity test for a smart television according to a first preferred embodiment of the invention;
- Fig. 2: schematically illustrates a method of designing a longevity test for a smart television according to a second preferred embodiment of the invention;
- Fig. 3: shows a top level system model of a longevity test for a smart television according to a third preferred embodiment of the invention;

- Fig. 4: shows a system model of the sources according to the third preferred embodiment of the invention;
- Fig. 5: shows a system model of the television operations according to the third preferred embodiment of the invention; and
- Fig. 6: shows a system model of the connectivity features according to the third preferred embodiment of the invention.

### DETAILED DESCRIPTION OF EMBODIMENTS

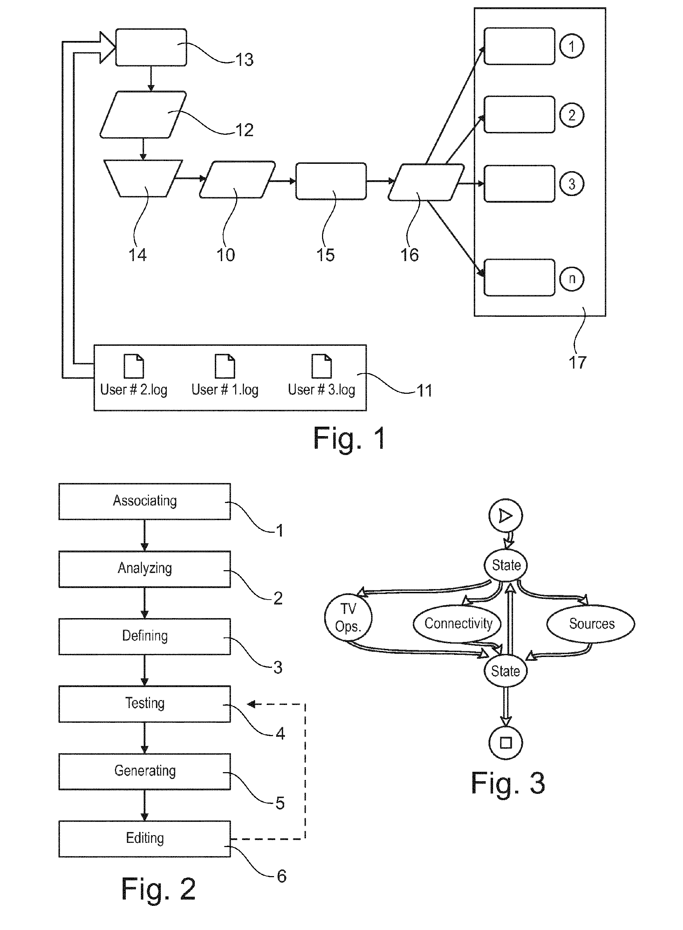

Fig. 1 summarizes an approach based on usage profiles of 50 real uses in combination with three usage log files 11 according to a first preferred embodiment of the invention. A number of 3 smart televisions are sent to a number n of 50 field testers or end users 17, respectively, each from a different social economic status. As soon as they connect their smart televisions to the Internet, a usage logger 13 starts to get log files from those televisions to detect which modules are visited by the end users and so to determine the visiting frequency of each module. In this first preferred embodiment one week full usage log files of the 50 end users are collected. By analyzing those log files the usage profiles 12 and modules being visited more by the real users are detected. By using the analysis results a system model 10 with Markov chains, in which transitions among system states are annotated with probability values, is defined and modelled 14. A usage model is a formal statistical representation of all possible uses of the system. A model structure is a directed graph in which nodes are states of use and arcs or arrows, respectively, are possible transitions.

A model-based test technique (MBT technique) is utilized for the test design and systemizes test case and test script generation based on models that represented the desired behavior of the SUT. The SUT model is provided as an input to an MBT tool, which automatically generates a set of test cases 15 and test scripts 16 by traversing the possible behavior scenarios on the system model 10. If there is change in a usage profile, those changes are reflected to the SUT model to generate new test cases with less effort compared to a manual test case and test script development.

Sample user log files 11 are also shown in Fig. 1. Three samples of user activity logs 11 are provided in this first preferred embodiment. In these log files, the interaction between television and end user is recorded. During modelling, the current functional state from the log file is described as "state". Commands that are sent via a remote controller or front panel buttons are defined as "transitions". By using these states and transitions test cases are determined which are highly probably to generate FAIL results on television and they are executed at the very beginning of the project to find defects at early stages of the development. Such log files support to determine user profiles in the software modules, which are frequently visited by a user.

The coverage of each generated test case is 100% which means that each generated test case visits all possible modules detected by the analysis of usage log files. So those test cases simulate daily usage. All possible modules are visited by going through different possible paths. When 365 different test cases are generated almost a full year of a real user is simulated. In this first preferred embodiment each generated test script takes approximately 1.5 hours for execution and by executing those 365 test cases this will take approximately 23 days and at the end of this 23 day-test approximately one year of usage of the SUT is simulated.

Fig. 2 schematically illustrates the steps of a method of designing a longevity test for a smart television according to a second preferred embodiment of the invention. In a first step, a plurality of smart televisions is associated 1 to a plurality of end users, wherein for each end user a usage log file 11 is generated. In a second step, a plurality of usage log files is analyzed 2 such that usage profiles 12 of the plurality of end users and/or visiting frequencies of modules of the plurality of smart televisions are detectable. A system model 10 according to the second step is defined 3 in the third step, wherein the system model 10 comprises a plurality of state transitions and a corresponding plurality of transition probability values. In a fourth step, the defined system model 10 is tested 11, thereby a plurality of test designs based on the detected usage profiles 12 and/or the detected visiting frequencies of modules of the second step is generated 5. Optionally, in a fifth step, the usage profiles 12 and/the visiting frequencies of modules are edited 6 based on the result of the fourth step and the fourth step is repeated such that the plurality of test designs is updated.

Fig. 3 shows a top level system model for a longevity test of a smart television according to a third preferred embodiment of the invention. The MBT technique for a test design is used and MBT systemizes test case generation based on models that represent the desired behavior of the SUT. The first stage of a longevity test modelling is to get user profiles from real users. Then, the user profiles are analyzed and their interaction with the televisions is determined and the modules that have a higher usage rate are listed. By using those frequently visited modules a system model is manually created. The system model defines the expected behavior of the SUT with respect to a set of inputs and actions of the user. The SUT model is provided as an input to an MBT tool, which automatically generates a set of test cases by traversing the possible behavior scenarios on the model. In addition, the SUT model and the generated test cases document and analyze the system behavior.

In this third preferred embodiment the finite state automation with Markov chains is applied to express the models of the SUT. According to other preferred embodiments of the invention, in order to express the SUT model a unified modelling language and/or event sequence graphs are applied.

Probabilities are used in combination with stimulation parameters and verification data and transitions to generate test cases and test scripts automatically via different test case generation algorithms. In this first preferred embodiment a Chinese postman algorithm is used. According to other preferred embodiments of the invention a user oriented, a most probable, a random and/or a tagged path algorithm is/are used.

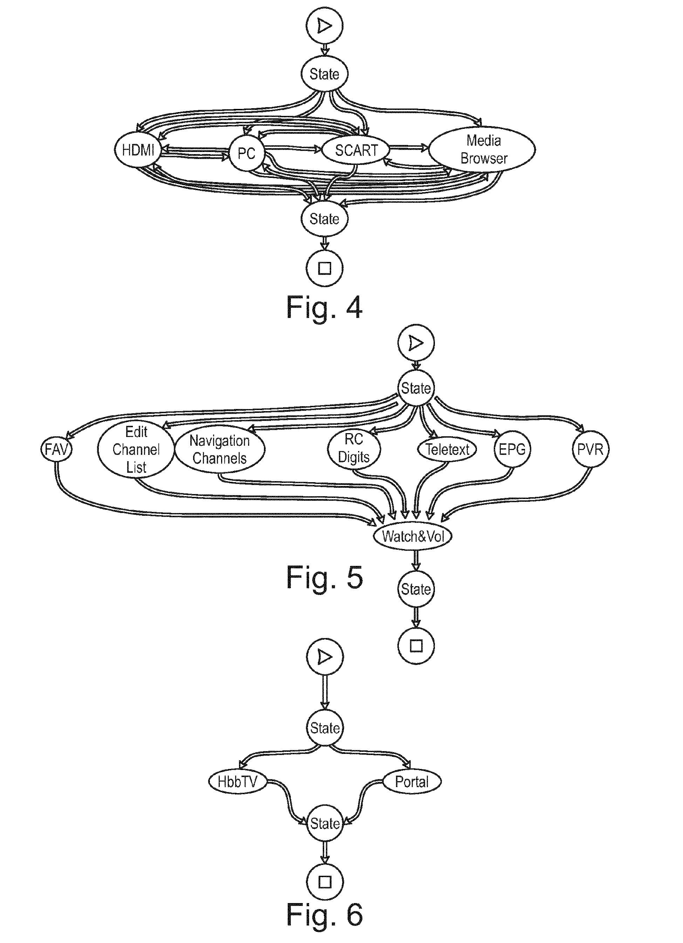

The user logs are analyzed and sources, such as going from a SCART source to a HDMI source or going from a personal computer source to a TV source, connectivity features, such as YouTube, Portal, HbbTV applications, and TV operations, such as menu navigation, channel navigation, teletext, are the modules which are frequently visited (cp. Figs. 4 to 6).

In Fig. 3, there are seven states, where two of them are initial and final states, two of them who are named "state" are used for providing a loopback in the model in order to check every sub model. Three of the remaining states are sub models which include other specific states and transitions in them. The modules from the user activities are grouped under three sub models. "TV operations" includes television functional activities, "Connectivity" includes connectivity based activities and "Sources" includes source based activities. Details of these three sub models can be seen in Figs. 4 to 6.

Fig. 4 shows a system model of sources according to the third preferred embodiment of the invention. Fig. 5 shows a system model of TV operations according to the third preferred embodiment of the invention and Fig. 6 shows a system model of connectivity features according to the third preferred embodiment of the invention.

Every transition shows an equal probability value. The sum of each transition probabilities from one state to another must be equal to 1. In the top level system model for a longevity test, there are three transitions from one state so that the probability of 1 is distributed to three transitions equally. It means that when test cases are automatically generated, the sub models are entered equally and a test case number from each sub model will be equal. Test cases and test scripts are automatically generated based on the system model. The generation of test cases starts from an initial state and ends with a final state.

As explained above, the invention relates to a method of designing a longevity test for a smart television, to a computer program, to a machine-readable storage unit and to a use of the method in applications of predicting longevity of connected smart televisions. The method comprises the steps: a) associating 1 a plurality of smart televisions to a plurality of end users, wherein for each end user a usage log file 11 is generated; b) analyzing 2 the plurality of usage log files 11 such that usage profiles 12 of the plurality of end users and/or visiting frequencies of modules of the plurality of smart televisions are detectable; c) defining 3 a system model 10 according to the analyzing step b), wherein the system model 10 comprises a plurality of state transitions and a corresponding plurality of transition probability values; and d) testing 4 the defined system model 10, thereby generating 5 a plurality of test designs based on the detected usage profiles 12 and/or the detected visiting frequencies of modules of step b). In this way, a possibility is provided for simulating daily usage in a limited period of time and for predicting software lifespan of a television.

## Claims

1. A method of designing a longevity test for a smart television, comprising the steps:
a) associating (1) a plurality of smart televisions to a plurality of end users, wherein for each end user a usage log file (11) is generated;
b) analyzing (2) the plurality of usage log files (11) such that usage profiles (12) of the plurality of end users and/or visiting frequencies of modules of the plurality of smart televisions are detectable;
c) defining (3) a system model (10) according to the analyzing step b), wherein the system model (10) comprises a plurality of state transitions and a corresponding plurality of transition probability values; and
d) testing (4) the defined system model (10), thereby generating (5) a plurality of test designs based on the detected usage profiles (12) and/or the detected visiting frequencies of modules of step b).

2. The method according to claim 1, editing (6) the usage profiles (12) and/or the visiting frequencies of modules based on the result of step d) and repeating step d) such that the plurality of test designs is updated.

3. The method according to one of the preceding claims, wherein the system model (10) comprises at least one of a Markov chain, an event sequence graph, a unified modelling language and a finite state automation.

4. The method according to one of the preceding claims, wherein the step of generating (5) the plurality of test designs is performed according to a predetermined algorithm.

5. The method according to claim 4, wherein the predetermined algorithm comprises at least one of a Chinese postman, a user-oriented, a most probable, a random and a tagged path algorithm.

6. The method according to one of the preceding claims, wherein during the step of analyzing (2) a source, a connectivity feature and/or a television operation is/are determined.

7. The method according to claim 6, wherein the source corresponds to at least one of SCART, HDMI, personal computer and media browser.

8. The method according to claim 6, wherein the connectivity feature corresponds to at least one application, such as YouTube, Portal and HbbTV.

9. The method according to claim 6, wherein the television operation corresponds to at least one of menu navigation, channel navigation, teletext and an electronic program guide.

10. A computer program, loadable or loaded in a memory of a computer with orders readable by the computer for performing the method according to one of the preceding claims, when the orders are performed on the computer.

11. A machine-readable storage unit, on which a computer program according to the preceding claim is stored.

12. Use of a method according to one of claims 1 to 9 in applications of predicting longevity of connected smart televisions.
